# EUROPEAN PATENT APPLICATION

(11) **EP 1 721 831 A1**
(43) Date of publication of application: **15.11.2006**
(21) Application number: 05710636.1
(22) Date of filing: 24.02.2005
(51) Int. Cl.: B65D 8/02, B65B 7/28, B65D 1/02, B65D 53/00, B65D 77/20

(54) **SEALED VESSEL AND METHOD OF PRODUCING THE SAME**

(30) Priority: 03.03.2004 JP 2004058492
(71) Applicant: Kirin Brewery Company, Limited, Tokyo 104-8288 (JP)
(72) Inventor: Nakaya, Masaki, C/O Kirin Brewery Company, Ltd, Chuo-ku, Tokyo 1048288 (JP); Shirakura, Akira, C/O Kirin Brewery Company, Ltd., Chuo-ku, Tokyo 1048288 (JP)
(74) Representative: HOFFMANN EITLE
(86) International application number: PCT/JP2005/002985
(87) International publication number: WO 2005/085077

(57) **Abstract**

It is an object of the present invention to provide a container in which it is difficult for liquid to drip at a mouth portion having a good touch sensation by forming a structure in which a welded portion that was laser welded in a sealed container does not form a flange, and to carry out the achievement of making polymer material unnecessary and making excessive material in the wind-fastening portion unnecessary. Further, it is also an object to construct the lid and barrel of the vessel by using the same material, thereby facilitating the recycling of material. The sealed container in which a container body 1 having an opening 9 is sealed by a lid portion 3 which closes and covers said opening, comprising a welded portion 4, 14 in which an outer wall surface of a peripheral portion 2 of said opening or an edge 12 surface of said opening and an inner wall surface of said lid portion are laser welded in order to make it possible for at least an inner wall surface of the peripheral portion of said opening from an inner wall surface 6 of said container body to make contact with container contents.

## Description

### TECHNOLOGICAL FIELD

The present invention is related to a sealed container in which contents such as foods and beverages and the like can be sealed with good sealing performance and there is little dripping of liquid at a mouth portion having a good touch sensation, and in particular to a sealed container having a welded portion that was laser welded and a manufacturing method thereof.

### PRIOR ART TECHNOLOGY

As for a sealed container, for example, as for a beverage container, various containers such as bottles, cans, plastic containers and the like are known. In recent years, cans and plastic containers have been widely used from the viewpoint of convenience such as the quality of the handling performance thereof and the like. Of these, cans are in wide circulation because the container cost is low, the industrial speed is fast, the transportation efficiency is high and the like. These cans are usually formed from a cylindrical "body portion" which includes a bottom and a "lid" which covers the opening of the body portion. The body portion and the lid portion are adequately connected, and from the need to seal contents such as foods and beverages and the like, the cans are made from metal such as aluminum or steel or the like.

The connection of the body portion and the lid portion is carried out by overlapping an end portion of the body portion and an end portion of the lid portion to form a flange structure which is then mechanically overlapped by wind-fastening. Because this wind-fastening process is a process which utilizes the mechanical deformation of a metal member, the lid portion is generally formed from a thicker member than the body portion, and is provided with a polymer material such as styrene-butadiene rubber or polyvinyl chloride or the like for content sealing. For this reason, a polymer material is required, and the use amount of metal material becomes large.

Accordingly, in order to solve this, with metal cans as a subject, technologies in which the sealing of cans is carried out by laser welding have been disclosed (e.g., see Patent Documents 1 - 3).

However, with regard to plastic beverage containers, it is difficult to carry out the wind-fastening process, and plastic can containers for beverages are not distributed. In plastic beverage containers, the most distributed containers are PET (polyethylene terephthalate) bottles. In PET bottles, a method in which a cap is screwed on a bottle mouth portion is used as a sealing method. However, this cap forms a main cause of large cost increases in the whole container. Furthermore, because the cap is mainly made of PP (polypropylene), it becomes a hindrance to recycling.

Patent Document 1: Publication No. WO02/42196 A2
Patent Document 2: Japanese Laid-Open Patent Publication No. SHO 63-194885
Patent Document 3: Japanese Laid-Open Patent Publication No. SHO 61-289932

### SUMMARY OF THE INVENTION

### PROBLEMS TO BE SOLVED BY THE INVENTION

According to the wind-fastening method carried out when carrying out the sealing of metal cans, the use of a polymer material and the excessive use of a can material at the wind-fastening portion are required and form a main cause of cost increases. In the laser-welded can container including Patent Document 1, an examination was carried out for the purpose of reducing the use amount of materials and making polymer materials unnecessary, and even though laser welding was tested in place of prior art wind-fastening, this has not been put to practical use because it could not surpass the wind-fastening method.

On the other hand, in the laser-welded can container including Patent Document 1, because a flange is still formed, even though wind-fastening is not carried out, this flange lowers the ease of drinking and promotes liquid dripping. Accordingly, the disadvantage due to the flange is left unsolved.

It is an object of the present invention to provide a container in which it is difficult for liquid to drip at a mouth portion having a good touch sensation by forming a structure in which a welded portion that was laser welded in a sealed container does not form a flange, and to carry out the achievement of making polymer material unnecessary and making excessive material in the wind-fastening portion unnecessary. At this time, it is an object to carry out miniaturization of the lid itself by making a structure in which a flange is not formed. In the case where the sealed container is a plastic container, it is an object to improve the filling speed and transportation efficiency and improve the recyclability of the container compared to prior art PET bottles. At this time, because the plastic container has translucency, the sealed container, as is different from a metal can, is designed to make the contents visible.

### MEANS FOR SOLVING THE PROBLEMS

From the results of diligent developments to make polymer materials unnecessary and reduce the use of excessive material in the wind-fastening portion, the present inventors discovered that the problems described above can be solved by providing a welded portion which is laser welded without forming a flange like that of a wind-fastened portion, whereby the present invention was completed. Namely, the sealed container according to the present invention is a sealed container in which a container body having an opening is sealed by a lid portion which closes and covers said opening, and includes a welded portion in which an outer wall surface of a peripheral portion of said opening and an inner wall surface of said lid portion are laser welded in order to make it possible for at least an inner wall surface of the peripheral portion of said opening from an inner wall surface of said container body to make contact with container contents. Further, a sealed container of another embodiment of the present invention is a sealed container in which a container body having an opening is sealed by a lid portion which closes and covers said opening, and includes a welded portion in which an edge surface of said opening and an inner wall surface of said lid portion are laser welded in order to make it possible for at least an inner wall surface of the peripheral portion of said opening from an inner wall surface of said container body to make contact with container contents. In this regard, the case where said welded portion does not form a flange is included. When these sealed containers according to the present invention are given a structure in which the welded portion that was laser welded does not form a flange, it is difficult for liquid to drip at a mouth portion having a good touch sensation. Further, because polymer materials are also unnecessary and there is no wind-fastened portion, excessive material is also unnecessary. Furthermore, the lid itself can be miniaturized.

The sealed container according to the present invention also includes the case where a non-welded portion in which an inner wall surface of a peripheral portion of said lid portion is not welded to an outer wall surface of said container body is provided. In the case where welding places form lid opening places, the non-welded portion forms a finger catching portion or a tab, and this improves the lid opening capability.

The sealed container according to the present invention also includes the case where said lid portion has a thickness of 0.2 mm or higher. When the thickness of the lid portion is made 0.2 mm or higher to impart rigidity, it can be used as a sealed container without bursting even in the case where internal pressure is applied to the container such as by filling with a carbonated beverage or the like. The laser welding process can carry out welding even when the thickness of the lid portion is made 0.2 mm or higher, and this is different from a heat sealing process.

The sealed container according to the present invention includes the case where said welded portion is laser welded in two or more loop shapes along the periphery of said opening. In the welded portion, the entire surfaces of the connected surfaces may be welded, but by carrying out laser welding in two or more loop shapes, the connection strength, the sealing performance and the easy lid opening capability can be secured with good balance.

The sealed container according to the present invention includes the case where said lid portion has a multilayer structure in which an annular layer having an inner diameter roughly the same as the opening diameter of said opening is connected to the inner wall surface side, and the container seal is opened by peeling apart said lid portion from said annular layer in the state where said annular layer remains laser welded to said container body. By separating the portion of the lid portion welded to the container body and the portion which is peeled apart when the container is opened, it is possible to impart a high sealing performance and an easy container opening capability at the same time.

In the sealed container according to the present invention, said container body and said lid portion are preferably formed from synthetic resin. The filling speed, transportation efficiency and the recyclability of the container are improved. Furthermore, the container contents are visible.

The sealed container according to the present invention includes the case where said container is a beverage container.

The method of manufacturing a sealed container according to the present invention is a method of manufacturing a sealed container in which a container body having an opening is sealed by a lid portion which closes and covers said opening, and includes a process in which after forming bonded surfaces by bonding an outer wall surface of a peripheral portion of said opening and an inner wall surface of said lid portion in order to make it possible for at least an inner wall surface of the peripheral portion of said opening from an inner wall surface of said container body to make contact with container contents, said bonded surfaces are irradiated with a laser to form a welded portion. The method of manufacturing a sealed container of another embodiment according to the present invention is a method of manufacturing a sealed container in which a container body having an opening is sealed by a lid portion which closes and covers said opening, and includes a process in which after forming bonded surfaces by bonding an edge surface of said opening and an inner wall surface of said lid portion in order to make it possible for at least an inner wall surface of the peripheral portion of said opening from an inner wall surface of said container body to make contact with container contents, said bonded surfaces are irradiated with a laser to form a welded portion. By including this process, connecting is very easy because it can be carried out just by irradiating the connected surfaces with the laser, and there is no formation of a flange at the welded portion which is the connection place.

The method of manufacturing a sealed container according to the present invention preferably includes a process which provides a laser light absorbing portion in at least one of an outer wall surface of the peripheral portion of said opening or an inner wall surface of said lid portion, or in at least one of an edge surface of said opening or an inner wall surface of said lid portion. This is preferred in the case of laser welding transparent plastic which does not absorb laser light, or in the case of laser welding plastic which is not transparent plastic but does not have an absorption band for the wavelength of the laser light. The laser has characteristics which make it possible to irradiate only a fine area. By providing an absorption portion in the connected portion, it is possible to act the laser only in such portion. Namely, by suitably moving the irradiation position of the laser, fusion can be carried out by noncontact easily with good precision even if there are contours or undulations which make mechanical contact complicated, whereby sealing is possible, and this is different from wind-fastening and heat sealing.

The method of manufacturing a sealed container according to the present invention preferably includes a case which provides a laser light absorbing material in a portion of at least one of an outer wall surface of the peripheral portion of said opening or an inner wall surface of said lid portion, or in a portion of at least one of an end portion of said opening or an inner wall surface of said lid portion. The laser can be acted in the place provided with the absorption material in the same way as for the absorption portion described above. Accordingly, by suitably moving the irradiation position of the laser, fusion can be carried out by noncontact easily with good precision even if there are contours or undulations which make mechanical contact complicated, whereby sealing is possible, and this is different from wind-fastening and heat sealing.

In the method of manufacturing a sealed container according to the present invention, laser irradiation to said welded portion is preferably carried out by fixing a laser oscillating element while said container body and said lid portion are rotated around a rotation axis formed by the central axis of the container, or carried out by rotating the laser oscillating element around said container body and said lid portion around a rotation axis formed by the central axis of the container. It is possible to carry out laser welding with good precision.

### EFFECT OF THE INVENTION

In the sealed container of the present invention, because the welded portion that was laser welded does not form a flange, there are no uneven shapes, the touch sensation of the mouth portion is good, and liquid dripping rarely occurs. This is achieved even without the use of polymer materials and excessive material of a flange portion which were required in metal cans. Further, the lid portion can be miniaturized. Furthermore, when the sealed container is a plastic container, because it does not require a screw-in type lid, the filling speed and transportation efficiency can be improved, and the recyclability of the container can be improved because the container body and the lid portion can be made of the same raw material. At this time, because it has translucency, the container contents become visible in the same way as a glass bottle. Further, in accordance with the method of manufacturing a sealed container of the present invention, connecting is very easy because it can be carried out just by irradiating the connected surfaces with the laser, and there is no formation of a flange at the connection place.

### BRIEF DESCRIPTION OF THE DRAWINGS

Fig. 1 shows partial vertical cross-sectional schematic drawings of a sealed container according to the present embodiments, wherein (a) is a first embodiment, (b) is a second embodiment, and (c) is a third embodiment.
Fig. 2 shows a partial vertical cross-sectional schematic drawing of a fourth embodiment of a sealed container according to the present embodiments.
Fig. 3 shows partial vertical cross-sectional schematic drawings of a fifth embodiment of a sealed container according to the present embodiments, wherein (a) and (b) show the sealed container at the sealing time, and (c) shows sealed container at the lid opening time.
Fig. 4 is a schematic process drawing (first manufacturing embodiment) showing various manufacturing processes for the sealed container according to the present embodiments.
Fig. 5 is a schematic process drawing (second manufacturing embodiment) showing various manufacturing processes for the sealed container according to the present embodiments.

### DESCRIPTION OF SYMBOLS

- 1, 11, 21, 31, 41, 61:: container body
- 2, 22, 32:: peripheral portion of opening
- 3, 13, 23, 33, 43, 62:: lid portion
- 4, 14, 24, 34, 44:: welded portion
- 5, 15, 25, 35:: non-welded portion
- 6, 16, 26, 36:: inner wall surface of peripheral portion of opening
- 9, 19, 29, 39, 49:: opening
- 12:: edge surface of opening
- 27:: tab
- 37:: catch portion
- 38, 48:: shoulder
- 47:: tab
- 50:: annular layer
- 63a:: lid portion conveying means
- 63b:: lid portion supplying means
- 64:: lid portion arranging means
- 65:: laser generating means
- 66:: bonded portion
- 67:: laser generator rotating means
- 68:: rotation table
- 69:: turntable
- 70:: defective container removing means
- 100:: sealed container

### PREFERRED EMBODIMENTS OF THE INVENTION

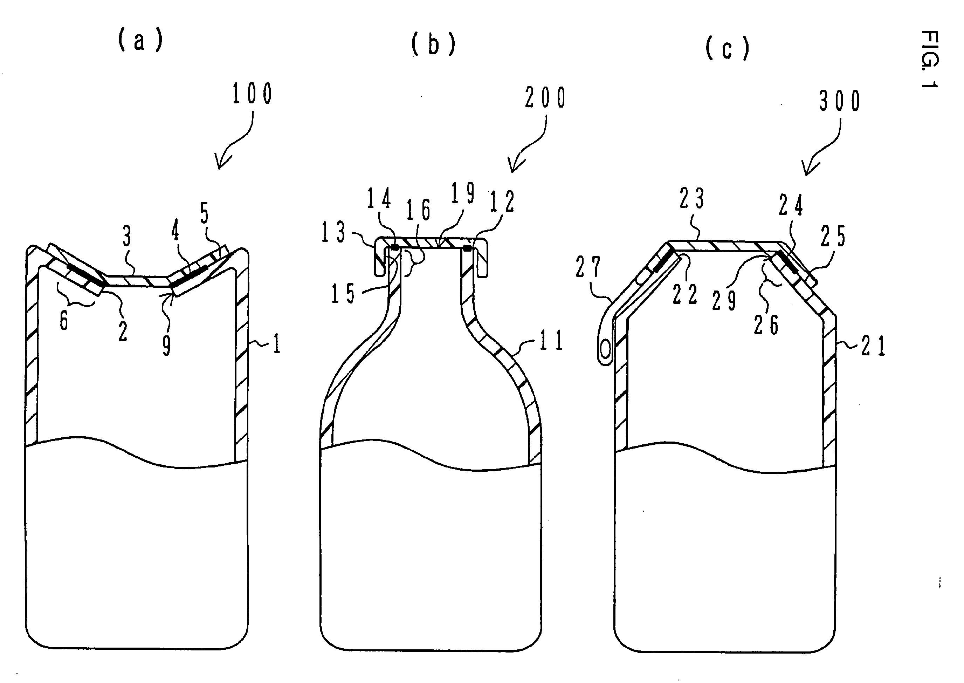

The present invention is described in detail below with reference to preferred embodiments, but it should not be interpreted that the present invention is limited to these descriptions. First, a sealed container according to the present embodiments will be described with reference to Figs. 1 ~ 3. Further, the same symbols are applied to the same members or same parts.

A partial vertical cross-sectional schematic drawing of a first embodiment of a sealed container according to the present embodiments is shown in Fig. 1(a). A sealed container 100 according to the first embodiment is a sealed container in which a container body 1 having an opening 9 is sealed by a lid portion 3 which closes and covers the opening 9, and includes a welded portion 4 in which an outer wall surface of a peripheral portion 2 of the opening 9 and an inner wall surface of the lid portion 3 are laser welded in order to make it possible for at least an inner wall surface 6 of the peripheral portion of the opening 9 from the inner wall surface of the container body 1 to make contact with the container contents.

A partial vertical cross-sectional schematic drawing of a second embodiment of a sealed container according to the present embodiments is shown in Fig. 1(b). A sealed container 200 according to the second embodiment is a sealed container in which a container body 11 having an opening 19 is sealed by a lid portion 13 which closes and covers the opening 19, and includes a welded portion 14 in which an edge surface of the opening 9 and an inner wall surface of the lid portion 13 are laser welded in order to make it possible for at least an inner wall surface 16 of the peripheral portion of the opening 19 from the inner wall surface of the container body 11 to make contact with the container contents.

The sealed container of the first embodiment and the sealed container of the second embodiment have the same structure with the exception that the laser welding places in the container bodies are different. In the sealed container of the first embodiment, because a large surface area of the welded portion 4 is obtained, the pressure resistance strength can be made large.

The container bodies 1, 11 and the lid portions 3, 13 may be formed from any raw material so long as it is a raw material in which laser welding is possible, but restrictions which also depend on the container contents are applied. For example, if it is a beverage container, from the viewpoint of quality preservation of the contents, it needs to be inert to the container contents. Furthermore, it is preferably provided with a gas barrier property for oxygen and the like. Further, in the case of filling a carbonated beverage, it needs to be formed from a raw material having pressure resistance. From this kind of viewpoint, the container bodies 1, 11 and the lid portions 3, 13 are preferably formed from a plastic material or a metal material such as aluminum or steel or the like. The container bodies 1, 11 and the lid portions 3, 13 are preferably formed from the same raw material from the viewpoint of recyclability. In particular, they are preferably formed from a plastic material, whereby welding is possible without heating to a high temperature by laser welding. When they form a laser-welded plastic sealed container, the filling speed and transportation efficiency are improved and the recyclability of the container is improved compared to prior art PET bottles. At this time, because the plastic container has translucency, it is different from a metal can and the contents can be made visible. Further, when compared to a can structure, sealing can be carried out even for shapes that can not be wind-fastened, and it is possible to carry out sealing using a smaller lid than the case where wind-fastening is carried out.

As for the resin used when forming the plastic container of the present invention, polyethylene terephthalate (PET) resin, polybutylene terephthalate resin, polyethylene naphthalate resin, polyethylene resin, polypropylene (PP) resin, cycloolefin copolymer resin (COC, cyclic olefin copolymer), ionomer resin, poly-4-methylpentene-1 resin, polymethylmethacrylate resin, polystyrene resin, ethylene-vinyl alcohol copolymer resin, acrylonitrile resin, polyvinyl chloride resin, polyvinylidene chloride resin, polyamide resin, polyamide-imide resin, polyacetal resin, polycarbonate resin, polysulfone resin, or ethylene tetrafluoride resin, acrylonitrile-styrene resin, and acrylonitrile-butadiene-styrene resin can form illustrative examples. Of these, PET is particularly preferred. Further, in the case where the container bodies 1, 11 and the lid portions 3, 13 are made of plastic, the inner surfaces thereof or the outer surfaces thereof or both surfaces thereof may be coated with a gas barrier property thin film such as a DLC (diamond-like carbon) film, a DLC film containing Si, a polymer-like carbon film, a SiOx film or the like. This is because a high gas barrier property is preferred in the case of a plastic container for beverages. Further, in the case where the gas barrier property thin film absorbs the laser, the laser light receiving portion generates heat. Accordingly, even when a container is formed from a transparent resin which does not absorb laser light, by forming a gas barrier property thin film, the welding efficiency is good without having to separately provide an absorption portion.

In the sealed container of the first embodiment and the sealed container of the second embodiment, by (1) making it possible for the inner wall surfaces 6, 16 to make contact with the container contents, and (2) connecting either the outer wall surface of the peripheral portion 2 of the opening 9 or the edge surface 12 of the opening 19 to the inner wall surface of the lid portion 3, the welded portions 4, 14 do not form a flange. Further, because the connected portion is formed just by flatly overlapping and welding the container body and the lid portion, the lid portion itself can be miniaturized. Furthermore, in the present invention, the surface which can make contact with the container contents in the lid portion is described as the inner wall surface of the lid portion.

So long as the above-described connecting structure is satisfied, the shape of the lid portion and the shape of the container body, in particular the shape of the opening can be suitably changed. In the sealed container 100 of the first embodiment, the container body 1 has a shape in which the wall thereof is folded toward the inside of the container, and the opening 9 is formed at a position which is lower than the height of the folded portion. By giving the container body 1 this kind of shape, it forms a shape in which a straw can be easily inserted in the opening 9 at the time the lid is opened. The lid portion 3 has a size which at least covers the opening 9 in order to make it possible to seal the opening 9, and is formed so as to follow the shape of the outer wall surface of the container body 1 surrounding the opening 9. In this way, bonding surfaces which form the connected portion that forms the welded portion 4 are formed.

The outer edge portions of the openings 9, 19 of the container bodies 1, 11 are preferably laser welded up to the peripheral portions 2, 12 in order to prevent retention of the container contents.

On the other hand, non-welded portions 5, 15 in which inner wall surfaces of the peripheral portions of the lid portions 3, 13 are not welded to the outer wall surfaces of the container bodies 1, 11 may be included in the sealed container of the first embodiment and the sealed container of the second embodiment. In Figs. 1(a) and 1(b), the non-welded portions 5, 15 form unsealing tabs. By providing the non-welded portions 5, 15, in the case where welding places form lid opening places, the non-welded portions 5, 15 can be easily caught by fingers when the lid is to be opened, and this makes it possible to impart an easy lid opening capability.

Further, in addition to the containers of the type where the welded portions 4, 14 are peeled apart to open the lid, the sealed container according to the present embodiments also includes containers of the type where the welded portions 4, 14 are not peeled apart, for example, where the seal is broken at a spout provided in the lid portion separate from the openings 9, 19 by plug opening means such as a pull tag or the like.

The lid portions 3, 13 preferably have a thickness of 0.2 mm or higher, and more preferably 0.3 mm or higher. In the case where the lid portions 3, 13 are sheets less than 0.2 mm, the container body and the lid portion can be fused and welded by a heat sealing process, without laser welding the welded portions 4, 14. However, in the case where the thickness of the lid portions 3, 13 is 0.2 mm or higher, it becomes difficult to apply the heat sealing process, and if the shapes of the connecting surfaces are complex shapes, the application of the heat sealing process itself is difficult. In contrast to this, in the laser welding process, for raw materials such as plastic and the like which are transparent materials, there is no heating so long as the laser is not absorbed. Accordingly, laser welding is possible even when the thickness of the lid portion 3, 13 is 0.2 mm or higher. In the case where the thickness of the lid portion 3, 13 is 0.2 mm or higher, because the lid portion itself is imparted with rigidity, the strength of the sealed container, in particular the pressure resistance is improved. Further, the thickness of the container bodies 1, 11 is preferably made 0.2 mm or higher in order to impart rigidity.

Next, a partial vertical cross-sectional schematic drawing of a third embodiment of a sealed container according to the present embodiments is shown in Fig. 1(c). In a sealed container 300 according to the third embodiment, an end portion of a lid portion 23 is provided with a tab 27 for opening the lid. Because a truncated cone shape is formed from a container body 21 up to an opening 29, a mouth portion which makes it easy to drink is formed. Further, the lid portion can be miniaturized, and the use amount of lid material can be reduced.

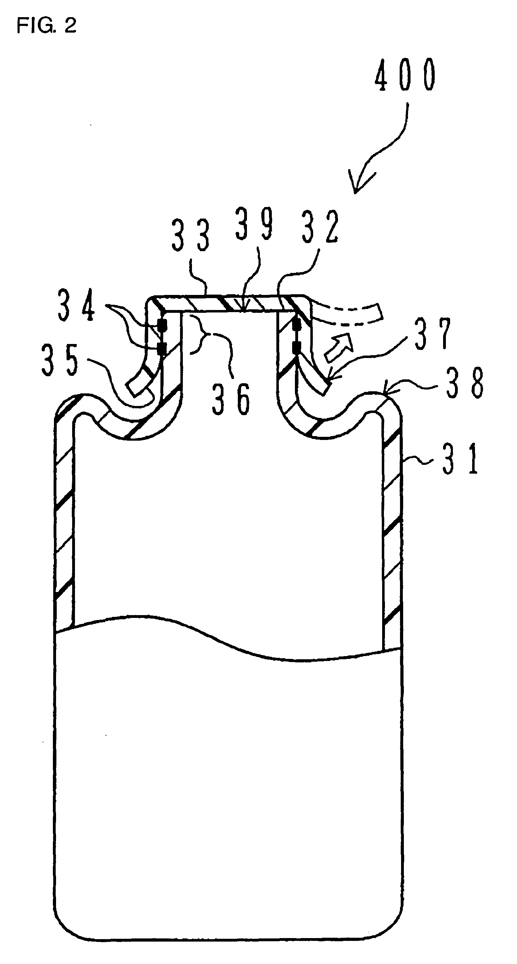

Next, a partial vertical cross-sectional schematic drawing of a fourth embodiment of a sealed container according to the present embodiments is shown in Fig. 2. In a sealed container 400 according to the fourth embodiment, a welded portion 34 follows the periphery of an opening 39, and laser welding is carried out in two loop shapes. In the welded portion, the entire surface of the connecting surfaces may be welded, but by carrying out laser welding in two loop shapes, the connection strength and sealing performance are the same as the case of total surface welding, and this makes it possible to open the lid more easily. Of course, the welded portion 34 may be laser welded in three or more loop shapes.

Further, in the sealed container according to the present embodiment, in order to prevent the lid from opening when the non-welded portions rub during transport, the container body is provided with a shoulder 38 as in the sealed container 400 shown in Fig. 2 to form a structure which guards the non-welded portion 35. Further, in the case where a shoulder 38 is provided, when it is difficult for fingers to catch the non-welded portion 35, a catch portion 37 of the non-welded portion 35 for making it easy for fingers to catch the non-welded portion 35 may be removed from the outer wall surface with the container body 31.

In the sealed container of the first - fourth embodiments, in the case where the lid is opened by peeling apart at the welded portion, peeling apart is carried out at the connecting surfaces of the container body and the lid portion, or peeling apart is carried out at an inner wall portion of the container body or peeling apart is carried out at an inner wall portion of the lid portion. These peeling apart places can be controllably selected because they correspond to places where laser absorbing portions are provided. In the case where a peeling apart place forms an end portion of the mouth portion, from the viewpoint of a good touch sensation, preferably peeling apart is carried out at the connecting surfaces of the container body and the lid portion, or peeling apart is carried out at the inner wall surface of the lid portion.

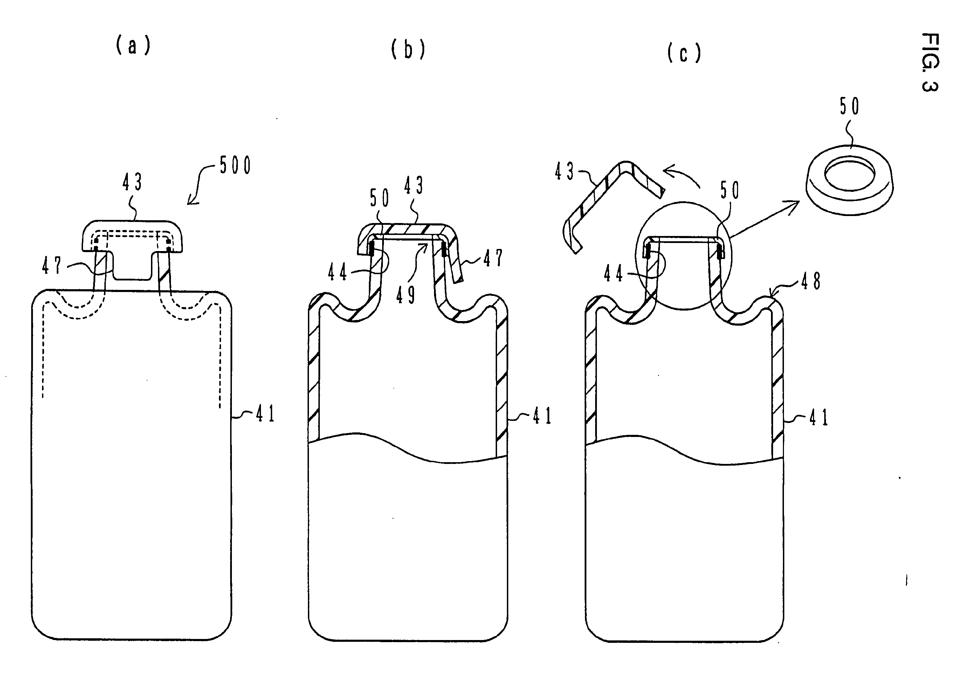

Next, a schematic drawing of a fifth embodiment of a sealed container according to the present embodiments is shown in Fig. 3. Fig. 3(a) is a side view drawing, Fig. 3(b) is a partial vertical cross-sectional schematic drawing when Fig. 3(a) is rotated 90°, and Fig. 3(c) is a partial vertical cross-sectional schematic drawing when the lid is opened. A sealed container 500 according to the fifth embodiment has a multilayer structure in which an annular layer 50 having an inner diameter roughly the same as the opening diameter of an opening 49 is connected to the inner wall surface side of a lid portion 43. The connecting surfaces of the annular layer 50 and a container body 41 are laser welded to form a welded portion 44. Further, as shown in Fig. 3(c), the container seal is opened by peeling apart the lid portion 43 from the annular layer 50 in the state where the annular layer 50 remains laser welded to the container body 41. A tab 47 provided on an end portion of the lid portion 43 can be easily caught by fingers, and a shoulder 48 prevents the tab 47 from being caught by rubbing during transport of the container. In the sealed container of the fifth embodiment, by separating the portion of the lid portion 43 welded to the container body 41 and the portion which is peeled apart when the container is opened, it is possible to impart a high sealing performance and an easy container opening capability at the same time.

In the sealed container of the first - fifth embodiments, the welded portion does not form a flange. Further, in the first - fourth embodiments, the peeling apart of the welded portion to form a mouth portion makes it possible to provide a mouth portion having a good touch sensation. Further, because the container contents do not adhere around a flange, there is little liquid dripping. Furthermore, because the lid portion can be miniaturized, the lid surface area becomes small, and the total pressure (pressure from the inside) applied to the entire lid portion becomes small when filled with contents such as a carbonated beverage or the like, whereby the pressure resistance is improved.

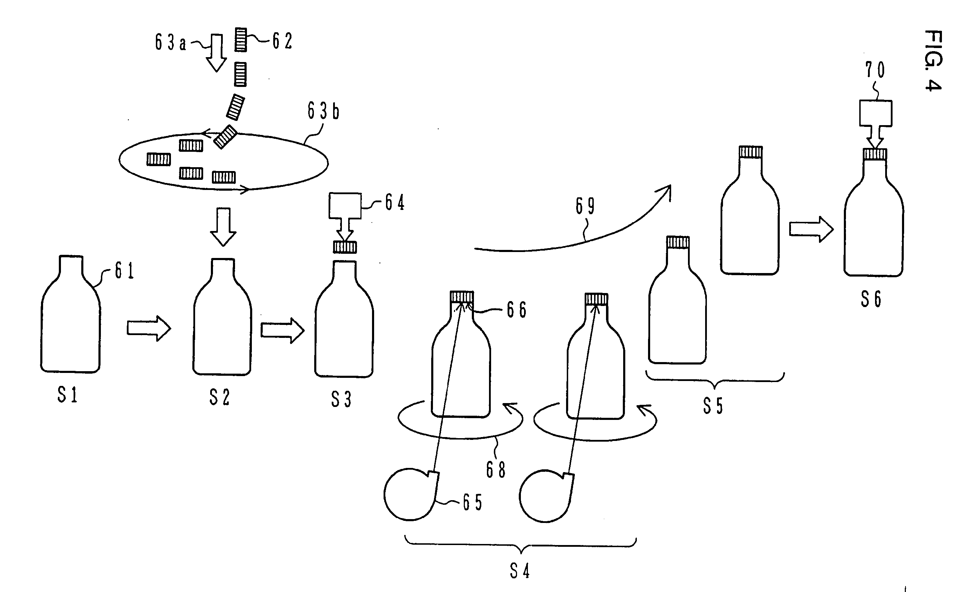

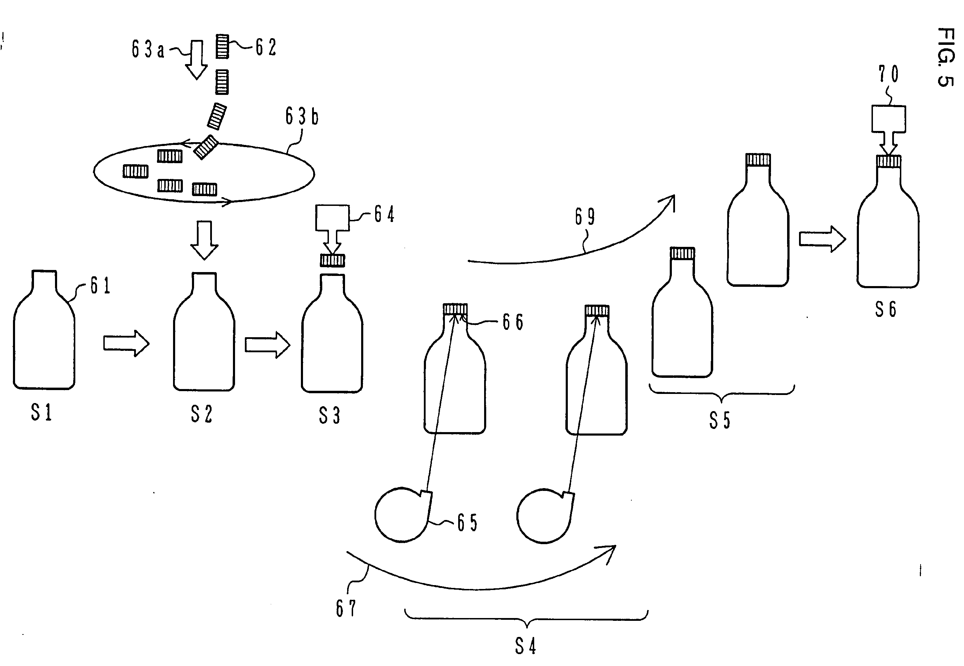

Next, methods of manufacturing a sealed container according to the present embodiment will be described with reference to Fig. 4 and Fig. 5. First, a description will be given for the process (first manufacturing embodiment) shown in Fig. 4. First, in step S1, a container body 61 that was filled with contents is introduced to a laser welding machine by conveying means (not shown in the drawing) such as a conveyor or the like. At this time, in the case where the contents are foaming, foam breaking is carried out, and carbon dioxide gas purging or nitrogen gas purging is carried out.

Next, in step S2, a lid portion 62 is conveyed by lid portion conveying means 63a to lid portion supplying means 63b. The lid portion supplying means 63b supplies one lid portion 62 to the opening of one container body 61.

Next, in step S3, lid portion arranging means 64 aligns the lid portion 62 with the opening of the container body 61 to produce bonding surfaces which will form connecting surfaces, and applies a suitable pressure so that the lid portion 62 and the opening of the container body 61 do not slip out of alignment. For example, in order to bond the lid portion to the container body, the lid portion is pressed above the lid portion by a rod-shaped member. The container body is pressed in indirectly by the pressing of the lid portion. The force pressure of the rod-shaped member is detected by a pressure sensor. The pressure sensor may be a proximity sensor for detecting the lid portion, but in general the sensitivity of a magnetic proximity sensor is not good for plastic. Accordingly, a pressure sensor or a laser displacement gauge is preferred. The detection value of the pressure that presses the lid portion 62 into the opening of the container body 61 detected by a pressure sensor or a laser displacement gauge is preferably incorporated in the lid portion arranging means 64.

Next, in step S4, the container body 61 with the lid 62 kept in alignment is placed on a turntable 69. Each container body 61 and the lid portion 62 thereof on the turntable 69 are rotated by a rotation table 68 which rotates the container around its own axis. At this time, a bonded portion 66 of the container body 61 and the lid portion 62 is irradiated with a laser by laser generating means 65. Irradiation with the laser can be carried out in a spot shape, a line shape or a ring shape, for example. The laser irradiation shape is suitably selected by the positional relationship between the laser generating means 65 and the bonded portion 66. At this time, the laser intensity is preferably monitored by monitoring the laser output. Further, the spot position of the laser is preferably monitored by monitoring light generation or heat generation by a photosensitive sensor or a temperature sensor such as an infrared sensor or the like. The welding of plastic is preferably monitored by monitoring light generation or heat generation by a photosensitive sensor or a temperature sensor. An imaging sensor such as a CCD or the like may be used at the same time.

The laser oscillating element installed in the laser generating means 65 can be a semiconductor laser, a gas laser such as a carbon dioxide laser or the like, or a YAG laser, and said laser oscillating element is suitably selected in accordance with various parameters such as the material of the container body and the lid portion which undergo laser welding the laser irradiation moving speed and the irradiation spot shape and the like. In the case where a plastic container is laser welded, a semiconductor laser (e.g., 1 W - 100 W output) is preferred.

In the case where the sealed container 100 according to the first embodiment is manufactured, after forming bonded surfaces by bonding an outer wall surface of the peripheral portion of the opening and an inner wall surface of the lid portion in order to make it possible for at least an inner wall surface of the peripheral portion of the opening from the inner wall surface of the container body to make contact with the container contents, the bonded surfaces are irradiated with a laser to form a welded portion.

On the other hand, in the case where the sealed container 200 according to the second embodiment is manufactured, after forming bonded surfaces by bonding an edge surface of the opening and an inner wall surface of the lid portion in order to make it possible for at least an inner wall surface of the peripheral portion of the opening from the inner wall surface of the container body to make contact with the container contents, the bonded surfaces are irradiated with a laser to form a welded portion.

In this regard, a process which provides a laser light absorbing portion in at least one of an outer wall surface of the peripheral portion of the opening or an inner wall surface of the lid portion, or in at least one of an edge surface of the opening or an inner wall surface of the lid portion, is preferably provided. Even if there are contours or undulations along the absorbing portion which make mechanical contact complicated, laser welding can be carried out with good precision. This is because the laser light can focus on the irradiation spot, and the place provided with the absorbing portion is mainly welded. The absorbing portion can be formed by any method such as that where coloring is carried out by bonding an absorbing material such as an organic pigment or an inorganic pigment which absorb the wavelength of the laser light to a prescribed connecting place. The wavelength of the laser light, the laser power and the laser scanning speed are preferably adjusted in accordance with the absorption degree of the absorbing portion for the laser light. This process may be carried out at any time before laser irradiation, and may be provided before step S1, or in any one of step S1, step S2, step S3 or step S4. Further, because this process is effective in the case where a material that does not have an absorption band for the laser light is welded, it is not an essential process.

Further, a laser light absorbing material may be included in a portion of at least one of an outer wall surface of the peripheral portion of the opening or an inner wall surface of the lid portion, or in a portion of at least one of an end portion of the opening or an inner wall surface of the lid portion. This process may be carried out at any time before laser irradiation, and may be provided before step S1, or in any one of step S1, step S2, step S3 or step S4. For example, a laser absorbing material such as a coloring pigment or the like is included in the case of forming the lid portion and/or the container body. Further, because this process is effective in the case where a material that does not have an absorption band for the laser light is welded, it is not an essential process in the case where the material absorbs the laser light, such as the case that where a color container colored by mixing a pigment or the like is laser welded or the like. In the case where the connected portion absorbs laser light as in some of the colored bottles, laser welding can be carried out just by irradiation with the laser. Further, the wavelength of the laser light, the laser power and the laser scanning speed are preferably adjusted in accordance with the content of the laser absorbing material such as a coloring pigment or the like.

Because the container body 61 and the lid portion 62 are rotated by the rotation table 68, the laser irradiation portion moves along the opening of the container body 61, and sealing is finished by completing one cycle. The welding speed depends on the shape and the material and the like to be connected, and is 8 - 50 cm/sec, for example. At this time, the places welded by laser welding can be precisely controlled. Further, the output and the wavelength of the laser determine the degree of fusion welding, and a welded portion can be formed with better precision than heat sealing or ultrasonic welding.

Further, laser irradiation may be carried out for two or more cycles. By passing the laser spot several times, or having a plurality of connected portions as shown in Fig. 2, it is possible to carry out welding reliably. Further, laser welding in two or more loop shapes may be carried out by providing two or more laser oscillating elements and carrying out one cycle.

Next, in step S5, laser welding is finished and the sealed container that was sealed is taken down from the turntable 69.

Next, in step S6, containers having sealing defects are removed by defective container removing means 70. The judgment of sealing defects is preferably carried out based on the monitoring results described above and visual inspection results of an image inspecting device (not shown in the drawings).

Next, a description will be given for the process (second manufacturing embodiment) shown in Fig. 5. Because step S4 is different in the process shown in Fig. 4 and the process shown in Fig. 5, a description is given for step S4.

In step S4, the container body 61 with the lid 62 kept in alignment is placed on a turntable 69. Each container body 61 and the lid portion 62 thereof on the turntable 69 are at rest on the turntable. At this time, a bonded portion 66 of the container body 61 and the lid portion 62 is irradiated with a laser by laser generating means 65. Irradiation with the laser can be carried out in a spot shape, a line shape or a ring shape, for example. The laser irradiation shape is suitably selected by the positional relationship between the laser generating means 65 and the bonded portion 66. At this time, the laser intensity is preferably monitored by monitoring the laser output. Further, the spot position of the laser is preferably monitored by carrying out monitoring in the same way as the case described in the process of Fig. 4. The welding of plastic is also preferably monitored by carrying out monitoring in the same way as the case described in the process of Fig. 4. An imaging sensor such as a CCD or the like may be used at the same time.

The same element as that described in the process of Fig. 4 can be used as the laser oscillating element installed in the laser generating means 65.

In the case where the sealed container 100 according to the first embodiment is manufactured, after forming bonded surfaces by bonding an outer wall surface of the peripheral portion of the opening and an inner wall surface of the lid portion in order to make it possible for at least an inner wall surface of the peripheral portion of the opening from the inner wall surface of the container body to make contact with the container contents, the bonded surfaces are irradiated with a laser to form a welded portion.

On the other hand, in the case where the sealed container 200 according to the second embodiment is manufactured, after forming bonded surfaces by bonding an edge surface of the opening and an inner wall surface of the lid portion in order to make it possible for at least an inner wall surface of the peripheral portion of the opening from the inner wall surface of the container body to make contact with the container contents, the bonded surfaces are irradiated with a laser to form a welded portion.

In this regard, a process which provides a laser light absorbing portion and/or a process to include a laser light absorbing material are preferably provided in the same way as the process described in Fig. 4.

Because the laser generating means 65 is rotated around the container body 61 and the lid portion 62 by laser generator rotating means 67, the laser irradiation portion moves along the opening of the container body 61, and sealing is finished by having the laser generating means 65 complete one cycle by the laser generator rotating means 67. The welding speed depends on the shape and the material and the like to be connected, and is 8 - 50 cm/sec, for example. At this time, the places welded by laser welding can be precisely controlled.

Further, in the same way as in the case of Fig. 4, laser irradiation may be carried out for two or more cycles. By passing the laser spot several times, or having a plurality of connected portions as shown in Fig. 2, it is possible to carry out welding reliably. Further, laser welding in two or more loop shapes may be carried out by providing two or more laser oscillating elements and carrying out one cycle.

In the process shown in Fig. 5, because the laser oscillating element is a rotary type which rotates around the container, high-speed movement and laser welding at a plurality of connected places (simultaneous timing or separate timing, irradiation at the same place or irradiation at separate places) becomes possible.

In the prior art wind-fastening process for metal cans, it is difficult to judge whether or not a container is properly sealed at the point in time when the wind-fastening process is actually carried out. For this reason, regardless of there being good inspection results before the start of manufacturing, in the case where sealing defects occur in the wind-fastening process, defect detection is found out after a passage of time from the actual defect occurrence. In this case, the number of containers that need to be discarded and the stopping time of the industrial apparatus become very large. On the other hand, in accordance with the method of manufacturing a sealed container shown in Fig. 4 or Fig. 5 according to the present embodiment, because it is possible to detect in a very short time whether or not the welding process was carried out properly, the disadvantages described above in the wind-fastening process for metal cans do not occur.

## Claims

1. A sealed container in which a container body having an opening is sealed by a lid portion which closes and covers said opening, comprising a welded portion in which an outer wall surface of a peripheral portion of said opening and an inner wall surface of said lid portion are laser welded in order to make it possible for at least an inner wall surface of the peripheral portion of said opening from an inner wall surface of said container body to make contact with container contents.

2. A sealed container in which a container body having an opening is sealed by a lid portion which closes and covers said opening, comprising a welded portion in which an edge surface of said opening and an inner wall surface of said lid portion are laser welded in order to make it possible for at least an inner wall surface of the peripheral portion of said opening from an inner wall surface of said container body to make contact with container contents.

3. The sealed container according to Claim 1 or 2, wherein said welded portion does not form a flange.

4. The sealed container according to Claim 1, 2 or 3, further comprising a non-welded portion in which an inner wall surface of a peripheral portion of said lid portion is not welded to an outer wall surface of said container body.

5. The sealed container according to Claim 1, 2, 3 or 4, wherein said lid portion has a thickness of 0.2 mm or higher.

6. The sealed container according to Claim 1, 2, 3, 4 or 5, wherein the welded portion is laser welded in two loop shapes along the periphery of said opening.

7. The sealed container according to Claim 1, 2, 3, 4, 5 or 6, wherein said lid portion has a multilayer structure in which an annular layer having an inner diameter roughly the same as the opening diameter of said opening is connected to the inner wall surface side, and the container seal is opened by peeling apart said lid portion from said annular layer in the state where said annular layer remains laser welded to said container body.

8. The sealed container according to Claim 1, 2, 3, 4, 5, 6 or 7, wherein said container body and said lid portion are formed from synthetic resin.

9. The sealed container according to Claim 1, 2, 3, 4, 5, 6, 7 or 8, wherein said container is a beverage container.

10. A method of manufacturing a sealed container in which a container body having an opening is sealed by a lid portion which closes and covers said opening, comprising a process in which after forming bonded surfaces by bonding an outer wall surface of a peripheral portion of said opening and an inner wall surface of said lid portion in order to make it possible for at least an inner wall surface of the peripheral portion of said opening from an inner wall surface of said container body to make contact with container contents, said bonded surfaces are irradiated with a laser to form a welded portion.

11. A method of manufacturing a sealed container in which a container body having an opening is sealed by a lid portion which closes and covers said opening, comprising a process in which after forming bonded surfaces by bonding an edge surface of said opening and an inner wall surface of said lid portion in order to make it possible for at least an inner wall surface of the peripheral portion of said opening from an inner wall surface of said container body to make contact with container contents, said bonded surfaces are irradiated with a laser to form a welded portion.

12. The method of manufacturing a sealed container according to Claim 10 or 11, further comprising a process which provides a laser light absorbing portion in at least one of an outer wall surface of the peripheral portion of said opening or an inner wall surface of said lid portion, or in at least one of an edge surface of said opening or an inner wall surface of said lid portion.

13. The method of manufacturing a sealed container according to Claim 10, 11 or 12, further comprising a case which provides a laser light absorbing material in a portion of at least one of an outer wall surface of the peripheral portion of said opening or an inner wall surface of said lid portion, or in a portion of at least one of an end portion of said opening or an inner wall surface of said lid portion.

14. The method of manufacturing a sealed container according to Claim 10, 11, 12 or 13, wherein laser irradiation of said welded portion is carried out by fixing a laser oscillating element while said container body and said lid portion are rotated around a rotation axis formed by the central axis of the container, or carried out by rotating the laser oscillating element around said container body and said lid portion around a rotation axis formed by the central axis of the container.
